# EUROPEAN PATENT APPLICATION

(11) **EP 2 305 870 A1**
(43) Date of publication of application: **06.04.2011**
(21) Application number: 09172941.8
(22) Date of filing: 13.10.2009
(51) Int. Cl.: D04H 13/00, B32B 3/10, D02G 1/00, D04B 39/00

(54) **Wonder Fabric**

(30) Priority: 24.09.2009 IN MU22262009
(71) Applicant: Welspun Global Brands Limited, 400013 Mumbai (IN); Kulkarni, Sachin Hanmant, Senapati Bapat Marg, Lower Parel Mumbai 400013 (IN)
(72) Inventor: Kulkarni, Sachin Hanmant, 400013, Mumbai (IN)
(74) Representative: Broughton, Jon Philip

(57) **Abstract**

A novel textile material particularly a wonder fabric comprising of a see-through construction of plurality of yarns intersecting one another at certain angles hydro-laminated thereof with pseudo yarns formed out of staple fibres & mechanical cross linking of yarns on at least one side under specific conditions thereof resulting into a durable & multi functional material suitable for home & apparel textile applications is disclosed herein. A process for production and apparatus thereof are also disclosed.

## Description

### FIELD OF INVENTION

This invention generally relates to a novel textile material, more particularly wonder fabric, comprising of a see-through construction of plurality of yarns intersecting one another at certain angles, hydro-laminated thereof with pseudo yarns formed out of staple fibres & mechanical cross linking of yarns on at least one side under specific conditions thereof, resulting into a durable & multifunctional material suitable for Home, Upholstery & Apparel textile applications. The process for production & apparatus thereof are also described.

### BACKGROUND OF THE INVENTION

Traditionally, home & apparel textile fabric is produced through weaving or knitting technology. Weaving is the process of interlacement of plurality of yarns in vertical, i.e. warp way, direction with plurality of yarns in horizontal, i.e. weft way, direction. A Knitting process requires only one yam component. Using this yam component, loops are formed followed by intermeshing of the same with the previously formed loops.

Each technology has its own application. Woven fabrics are strong, have the advantages of drape & fall, and are most commonly used for formal wear and most home textile products. Knitted fabrics with their advantage of high extensibility/flexibility, softness & hugging tendency, are used for casual wear, undergarments & sometimes for sheeting applications in home textiles. However, knitted fabrics lack in their strength & durability.

Both the traditional textile manufacturing processes are highly expensive & labor intensive. With day by day increasing competition, there is a high demand for cost reductions. On the other hand raw material cost is continuously increasing & labor cost is also increasing. This can be seen from the fact that Europe & America are almost out of traditional textile manufacturing business. Mostly, third world is having high concentration of this industry where low labor cost was the attraction. Year by year here also labor cost is steadily increasing & the solution of shifting of the traditional textile manufacturing base is not remaining cost advantageous.

Of all costs, Raw material cost is the biggest contributor & it always contributes to the extent of 55% to 65%. Another important cost is operation cost which contributes to the extent of 10 %to 15% of total cost.

From the human comfort point of view, in home & apparel textile, consumption of natural fibre, for example, cotton based products is high & is continuously increasing.

With fibres like cotton, impact of raw material cost on total cost is very high.

There is an intense relationship between yam properties, fabric construction and fabric properties. Yarns should have certain minimum strength so as to withstand the stresses and strains of different types during weaving preparation and weaving & knitting.

On the similar lines, there exists an intense relationship between fibre properties and yam properties. One needs to maintain certain minimum fibre properties to meet the required yam properties. Most important of all the fibre properties is fibre length & strength. Longer & stronger fibre delivers stronger yarn. However, cost is directly dependent upon fibre length. This is how it puts a restriction on cost.

Also, it is very difficult to get all the fabric properties to the best level. Always it's a compromised approach followed for optimization of fabric properties. For example, wrinkle free 100% cotton fabric is of high demand. For this purpose cotton fabric is treated with wrinkle free finish. This brings down the tensile strength, tear strength, the look & feel of the fabric will not be the same, and fabric drape is also different. The wrinkle behavior improves with increased add-on of chemicals & with this increased chemical add-on, remaining fabric properties can be adversely affected. In this case, if one desires to have remaining properties at the best level, then there is a need for long & strong fibre meaning high cost.

With increasing demands for fabric functions like wrinkle free, odor free, antimicrobial, etc; lot of chemical finishes are reacted with fibres in the fabric or are fixed with fibres using binders. Since they hamper fabric properties like strength, feel, etc, one needs to use expensive long & strong fibres. This adds further to the cost.

Various attempts for increasing throughput rates are made in fabric weaving & knitting. Domier & also Pseudakoma, etc are supplying weaving looms which can run at the speeds of 1000 to 1200 pick/minute. Mayer & cie , Fukuwara are supplying circular knitting machines which can run at 80 to 100 r.p.m. Weaving looms with wider widths of 3.5 meter are also available which offer higher outputs.

On the similar lines, different high speed spinning technologies like Rotor spinning, Air jet spinning and Air vortex spinning are invented. However, Ring spinning is still maintaining its dominance in yam production. This is based upon its unique yam structure most suitable for apparel & home textiles. None of other spinning technologies are able to offer this yam structure. However, Ring spinning is the slowest among various yam manufacturing technologies. Various attempts to improve its throughput rate are made and are still going on. With so many such efforts in entire traditional textile chain, one can expect some relief on operation cost.

With high speed textile machines & an increasing demand for high density fabrics, raw material quality demands are going high & there by the costs also are going high & advantage of lower operation cost is defeated.

Contrary to all this, consumer is looking for good products at lower costs.

Though ring spun yam structure is the best, still there exists a limitation on fibre selection. One can not spin Ne 60/1 yam from 20 mm fibre length. Similarly, Ne 60/1 yam with strength of 16 Rkm can not run efficiently on high speed /wider Air Jet loom. In this way Technology has put a restriction on possibility of raw material value engineering.

Looking to today's scenario as mentioned above, traditional textile technology has reached to its limit. Though one wishes for value engineering and meet market needs, it is very difficult. So there is a need to look at the subject from different angle. There is a requirement to redefine the fibre/yarn/fabric properties relationships so as to arrive at techno-economical solution.

In this direction attempts are made to work upon Non woven. Nonwoven technology is another technology & method of producing fabrics. Using this technology, staple fibres & /or continuous filaments are bonded together to form a fabric. US Patents US6736916, US7455800, US7452834, US7432219, US4805275, US7331091, US6103061, and US6063717 disclose various ways of producing Non woven.
Non woven manufacturing involves web preparation, bonding, drying/curing, cutting slitting/winding.

There are various ways of bonding:
1. Mechanical bonding like malimo, needle punch & hydro entanglement
2. Chemical bonding
3. Thermal bonding
4. Combination of above

However, Nonwovens are not perfect like woven or knitted fabrics & so far are not suitable for direct use in home & apparel textiles. They do exist in combination with woven or knitted fabrics. One example of this is interlinings inside a garment.

Nonwovens are inferior in important aspects like look, drape & fall, abrasion & pilling resistance required for home & apparel textile. All these properties are not possible to be attained at the same time. For example, if bonding amount is improved so as to improve pilling resistance will hamper the hand feel & drape. Fabric becomes stiff. Another example can be that of fibre free movement which, if preserved, will generate good drape & feel. However, this will hamper the strength & pilling resistance. Various attempts have been made to improve Non woven & make it suitable for Apparel & Home Textile. A lot of work is still going on in this direction.

European Patent No. 0896645 discloses lamination of two non woven fabrics using chemical adhesives. The disclosure relates to making nonwoven fabrics which are durable for machine washing and durable for other wet and hard use or abusive applications. The described fabrics retain the qualities of a spun laced nonwoven fabric which include low cost, comfort, drape ability, softness, absorbency, breathability and others while having the durability comparable to traditional knitted or woven fabrics. However, commercial success of this is limited. This fabric lacks in textile fabric look & feel/ touch. This fabric, being originally a nonwoven, also lacks in pilling resistance. This fabric lacks in quick recovery from elastic deformations. If used in bottom weights, this limitation of the fabric results in cup formation at knees. This problem can be resolved through chemical adhesives, but this results in making fabric very stiff & uncomfortable to wear. This fabric can go as the work wear that is worn on top of textile apparel fabric. At least today we do not see this product on racks anywhere in the world meant for direct apparel & home textile application.

Another US Patent No. 3498874 reveals the attempt made to create a non woven material having a textile like look. Apertured nonwoven fabric which closely resembles woven fabric is characterized by fibers locked into place by tanglelacing that extends in a zigzag pattern along parallel bands interconnected laterally by fiber bundles defining rows of apertures between the bands. Preparation of the fabric from a loose layer of fibers, such as a random web, is illustrated by processing fiber layers on screen woven of heavier wires in one direction and 3 to 5 times as many finer wires per inch in the other screen direction. The fiber layer is traversed with fine, essentially columnar liquid streams from a manifold supplied with high pressure liquid to entangle the fibers. This product lacks in strength & durability required for its use into textile applications like home & apparel textile. Application of all such products is mostly limited to disposable products.

In US Patent No. 6315864, improved cloth-like base web is disclosed. In particular, the base web of the present invention has a cloth-like look and feel and improved absorbency. The base web is made by first hydroneedling a web containing pulp and/or staple fibers. A bonding material is then applied to at least one side of the web and the web is creped on at least one side. By combining a hydroneedling operation with a creping operation, a base web is produced that is strong, stretchable, very soft and absorbent. This also is a disposable product, suitable for hygiene applications.

Hydro-entanglement technology is the one area in which many researchers have tried to develop products which have a close resemblance to textiles. After understanding the potential of this technology, many attempts were made to use this technology to enhance traditional textile fabrics.

US Patents USRE40362, US5136761, US4967456, WO/2005/059215, WO/1992/007984 disclose the attempts made for using high pressure water jets & treat face & back side of woven or knitted fabric thereby enhancing their dimensional stability, pilling resistance & mechanical properties like tensile strength. However, this is a kind of finishing process. This improves textile fabrics but at a high cost when compared to traditional textile finishing process. Therefore, we do not see its commercial advantage & application.

Reference can be made to US Patent No. 4695500 which discloses the use of hydro entanglement technology for stabilization of bandage woven fabric. The stabilized fabric is formed by covering one or both sides of the loosely constructed base fabric with a light web of the staple length fibers, and subjecting the composite material to hydraulic entanglement while supported on a porous forming belt configured to direct and concentrate the staple length fibers at the intersections of the yarns comprising the base fabric.

This improves the ease of bandage fabric usage. Bandage fabric feels soft & is more absorbent. However, this is a disposable product & also adds to the cost of basic product. The application disclosed by US Patent No. 4695500 is limited to Bandage cloth which is used once & never washed & used again.

Another US Patent No. 4145468 discloses use of hydro entanglement technology for manufacturing of synthetic leather substratum material. Composite fabric useful as a substratum sheet for artificial leather is composed of a woven or knitted fabric constituent and at least one non-woven fabric constituent consisting of numerous fibrous bundles composed of a plurality of individual fibers arranged parallel to each other, and varying in the number of the individual fibers from which the bundles are formed, and numerous individual fibers independent from each other and from the fibrous bundles, the individual fibers and the fibrous bundles being randomly distributed and entangled with each other to form a body of non-woven fabric, and the non-woven fabric constituent and woven or knitted fabric constituent being superimposed and bonded together, to form a body of composite fabric, in such a manner that portions of the individual fibers and the fibrous bundles of the non-woven fabric constituent penetrate into the inside of the woven or knitted fabric and are entangled with a portion of fibers in the woven or knitted fabric constituent. This composite in its original format is not a durable product. Once coated with the suitable chemicals for making it synthetic leather, it becomes durable. This product is not suitable for Apparel or Home textile application.

Reference can be made to patent WO 2008 / 107907 A2. This invention relates to a composite fabric and a method & apparatus for manufacturing a composite fabric. In an embodiment the composite comprises a base fabric made by weaving or knitting. A plurality of gaps is disposed in between the fibres of the yarns of the base fabric. A plurality of functional fibres is entangled in the gaps followed by swelling of the fibres, with predetermined retention to the yarns of the base fabric. This is a first attempt made to develop an alternate to traditional textile fabric suitable for textile application. However, this composite has limited wash durability. Also, there are limitations in entanglement of individual fibres from the web material with the fibres from yarns of base fabric. This poses a risk of entanglement of fibres from web amongst themselves & thereby resulting into problem of missed out entanglement between fibres from web & fibres from yarn of base fabric there by resulting in to delamination & poor durability & life. Also, it does not reveal great commercial advantage over the present textile fabrics.

German company Freudenberg & US company BBA Nonwovens did try to develop & introduce 100% non woven called Evolon using Spun jet technology & splittable bicomponent synthetic filaments for apparel textile application. Compared to other non wovens, Evolon was a much durable product, processable on traditional textile dyeing & finishing machines. It also has a good drape.

However, this product was 100% synthetic & had a sueded leather touch which is not always appreciated. Also it lacked the traditional textile fabric look which people are familiar with. Also, it was expensive & did not get a commercial success.

As seen from prior arts & above, sufficient successful attempts are not made so far as to create an alternate to durable traditional textiles used for home, upholstery & apparel application. There is a need to relook at traditional textiles the way they are done today from the perspective of achieving required product attributes with ease of process & at lower costs.

Wonder fabric invention offers a solution required for today's traditional textiles. Through this invention, it is possible to deliver the right product suitable for home & apparel textile applications at costs lower than today's.

Unlike nonwovens or composites referred in prior art, wonder fabric so done is laundrable & durable & processable just like traditional textiles.

This invention simplifies the traditional textile process & helps curtail cost. Woven or knitted fabric is manufactured with lightest possible construction to the extent that it is having a see through effect & is completely unstable. Required properties / attributes / functions are inculcated in the later stage during hydro-lamination with pseudo yarns & cross linking fibres in a cost effective manner.

This makes traditional textile process simple & cost effective. This also makes the final product cost effective. Wonder fabric can be dyed & finished using the same equipments & process as they are used for traditional textiles.

In one final step, this invention inculcates important attributes like high comfort, easy care or wrinkle free property, good recovery from creasing, clean & sharp look, smooth & tough surface & of course good wash durability required for apparel & home textile applications.

In summary, non woven manufacturing technology is mainly focused on manufacture of disposable products like bandage, hygiene products, base material for synthetic leather, wipes, cosmetic de make up pads, etc. The few attempts made for developing alternatives to traditional textiles are focused mainly on synthetic fibres. When compared with traditional textile, these attempts have a different look, feel & touch.

Most of the attempts (at producing an alternative to traditional textiles) involving products made out of non woven material, are susceptible for pill formation.

The exposure of woven or knitted fabric alone to high pressure water jets is not directed to producing an alternative to traditional textiles; instead a traditional textile product with improved properties is produced at additional cost. After this process, fabric generally becomes stiff Since yarns are bloomed, light reflection from fabric surface is reduced, thereby making fabric to look dull.

Where attempts have been made to entangle individual fibres with the fibres in the yarns of a base fabric, it has been observed that individual fibres from the fibre web prefer to entangle amongst themselves resulting into a separate layer formation which is prone to delamination when washed thereby resulting in poor durability.

The products known in the art are therefore deficient and can be summarized as some or all of the following:
- Inadequate attempts for development of alternate to traditional textile;
- Having a different look, feel & touch when compared with traditional textile;
- Having a tendency to pill formation while in use.
- Having slow or incomplete recovery from creases, resulting into defects like cup formation on knees.
- Where synthetic fibres are used, the products may not be very comfortable to wear.
- Being disposable or for one time use.
- Being durable only as a result of chemical treatment, this resulting in limitations in possible application and high cost.

### OBJECT OF INVENTION

The main object of this invention is to provide a multifunctional wonder fabric comprising of fabric element with see through & unstable construction which is hydro-laminated with pseudo yarns & cross linking fibres.

Another object of invention is to provide a cost effective method & process of manufacturing fabric suitable for home, upholstery & apparel textile application.

Yet another object of the invention is to develop a new method of creating pseudo yarns in the plurality of gaps among the yarns & entangling them strongly with the yarns from woven or knitted fabric, thereby creating a look very close to traditional textile fabrics used for home, upholstery & apparel textile.

Further, object of this invention is to redefine traditional relationship between count & fabric construction with fabric properties.

Yet another object of the invention is to provide a new method & process of inculcating the required functions or attributes in the openly constructed & unstable fabric.

It is also the object of the invention is to provide a repeatedly launderable fabric with high durability.

### SUMMARY OF INVENTION

In accordance with above objectives, the present invention provides a novel multifunctional wonder fabric suitable for sheeting, mattress/pillow shell & similar applications in home textiles. This fabric is also suitable for tops & bottoms, undergarments & similar applications in apparel textiles. This fabric is also suitable for curtains, furniture covers & similar products in upholstery.

According to present invention, the wonder fabric comprises an open fabric with see through & unstable construction of intersecting plurality of yarns together with pseudo yarns hydro laminated thereby delivering a stable product with acceptable look & functions / attributes required for home, apparel & upholstery applications.

According to present invention, a fabric with see through & unstable construction is hydro laminated with pseudo yarns on at least one side thereby inculcating properties like dimensional stability, strength & durability.

According to present invention, fibres which do not participate in the formation of pseudo yarns are cross linked with yarns of fabric thereby helps to inculcate properties like easy care / wrinkle free, recovery from creases & dimensional stability.

According to present invention, amount of entanglement depicts the textile feel, touch & behavior.

According to present invention, fabric is either woven or knitted & can be taken directly from loom or prior to dyeing or dyed or in finished form. The so hydro laminated wonder fabric can be dyed & finished in the later stage in the same way like any other textile fabric.

The present invention meets the needs brought about by the deficiencies present in the prior art by providing an alternative to traditional textile.

Some embodiments according to the invention have a comparable look to traditional textile.

Some embodiments according to the invention have a comparable feel to traditional textile.

Some embodiments according to the invention have a comparable touch to traditional textile.

Some embodiments according to the invention have improved mechanical properties.

Some embodiments according to the invention have improved physiological properties.

Fibres which do not participate in the pseudo yam formation can entangle directly with the yarns from see through fabric.

The combination of pseudo yarns & yarns from see through fabric according to the invention results in a look and/or feel and/or touch comparable with traditional textile.

Wonder fabrics according to the invention can be durable after repeated washes as a result of good consolidation & bonding of fibres.

Wonder fabrics according to the invention may be made from natural and/or manmade fibres.

Wonder fabrics according to the invention can have a higher pilling resistance than traditional textile (indicating a high service life) as a result of good compactness & bonding of the fibres and a smooth surface.

Wonder fabrics according to the invention may exhibit quick absorption and moisture transportation (indicating high comfort) as a result of pseudo yarns with porous structure coupled with continuous capillaries among fibres and/or the combing through of yarns from see through fabric.

Wonder fabrics according to the invention have improved mechanical properties like tear & tensile strength as a result of good consolidation and/or bonding of fibres.

The improved properties & performance of wonder fabrics according to the invention can be achieved at reduced weight (5% up to 35%), thereby keeping product cost low.

### BRIEF DESCRIPTION OF DRAWINGS

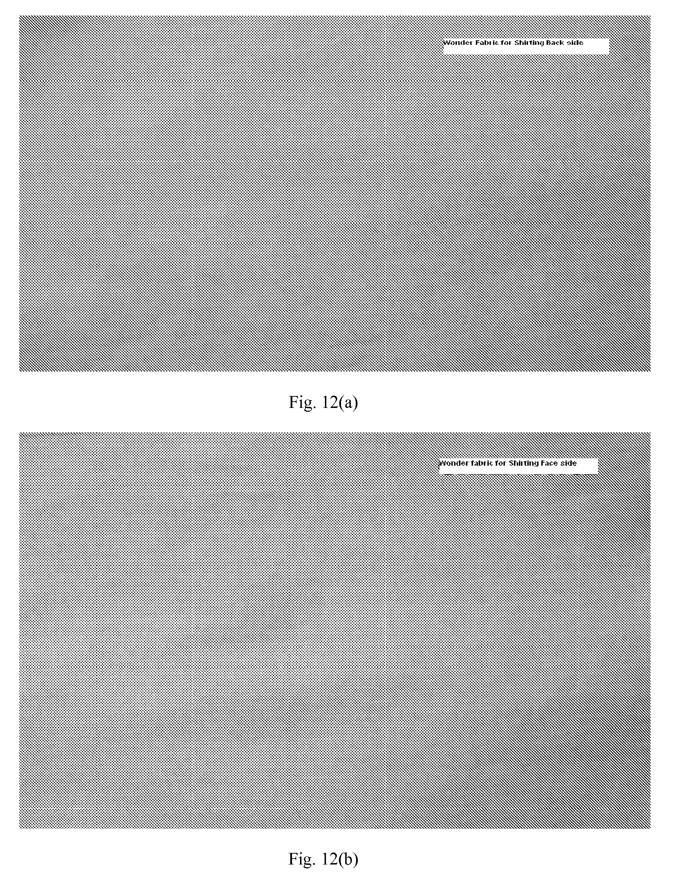

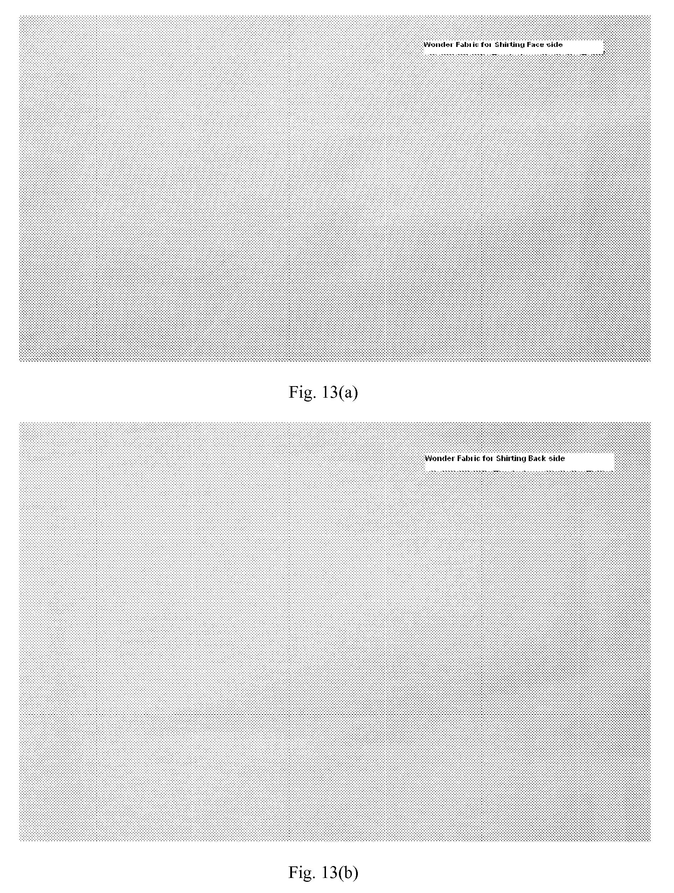

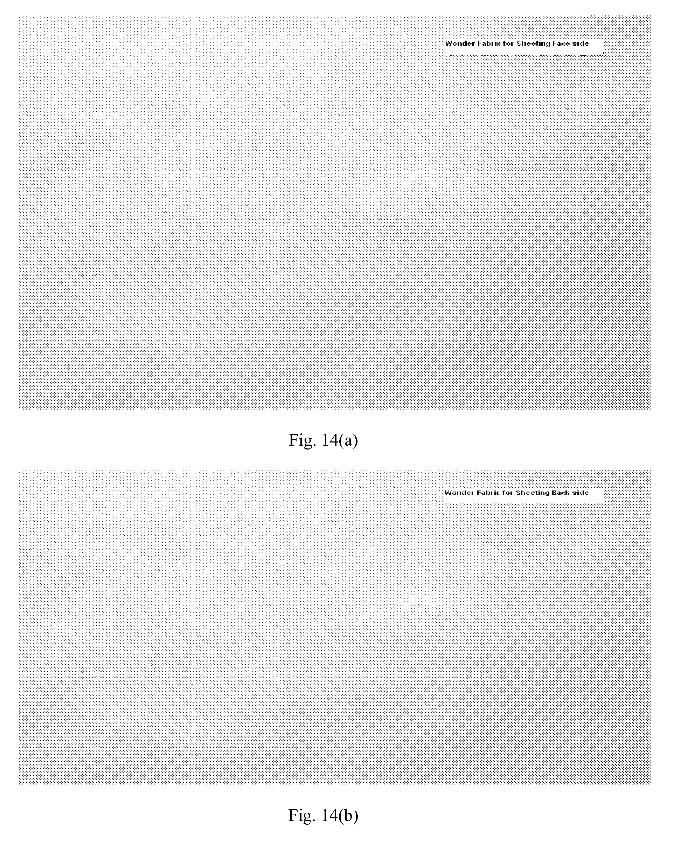

Figure 1 shows the schemata of cross-section of See through component fabric & of Wonder fabric.
Figure 2 shows the schemata of plan view of See through component fabric & Wonder fabric.
   Two Textile substrate photographs when compared with photographs of the wonder fabric face side & back side: Green (Fig 12 (a) and (b)), Orange (Fig 13 (a) and (b)) in color & White bleached (Fig 14 (a) and (b)), one can clearly find out the look aspects inculcated by the invention. From these figures, one can make out how the fabric with see through construction is converted into non transparent wonder fabric suitable for home, upholstery & apparel textile.

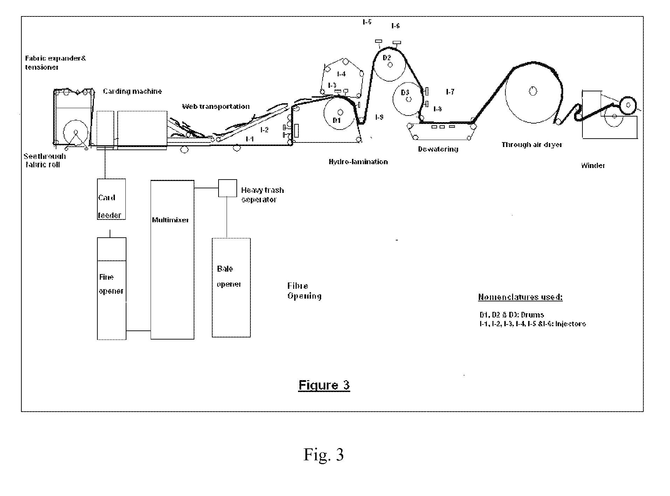

Figure 3 shows the Equipment configuration in its entirety.

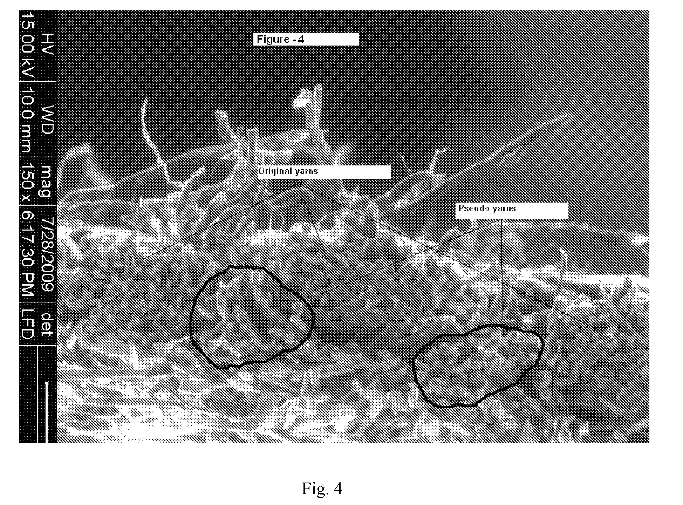

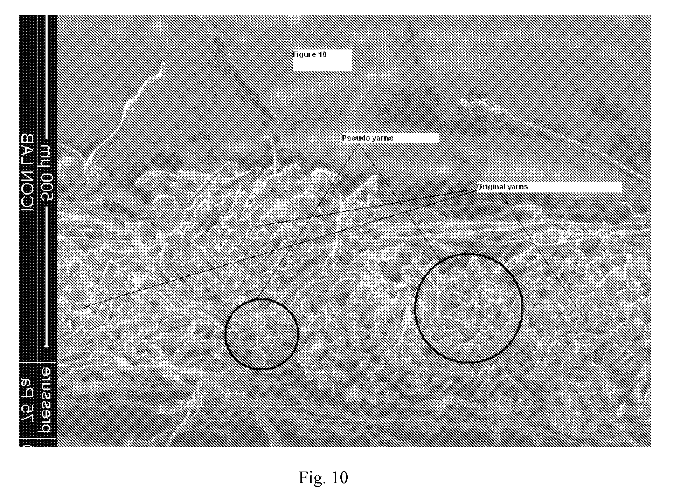

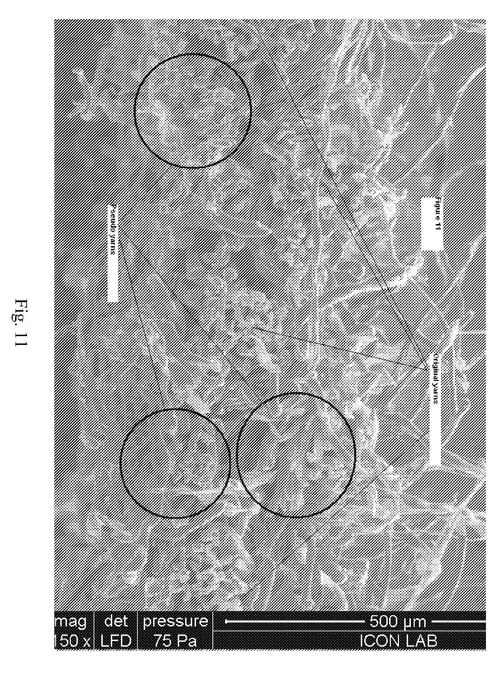

Figure 4, 10, 11 shows the SEM Photograph of cross-section of wonder fabric.

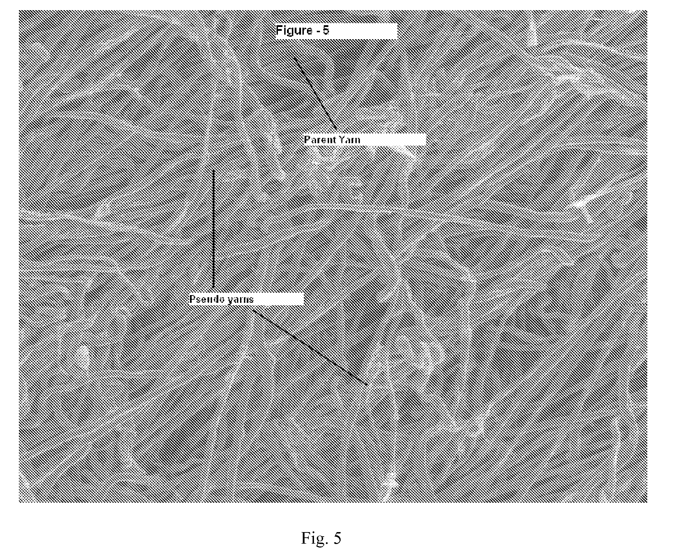

Figure 5 shows the SEM Photograph of plan view of Wonder fabric.

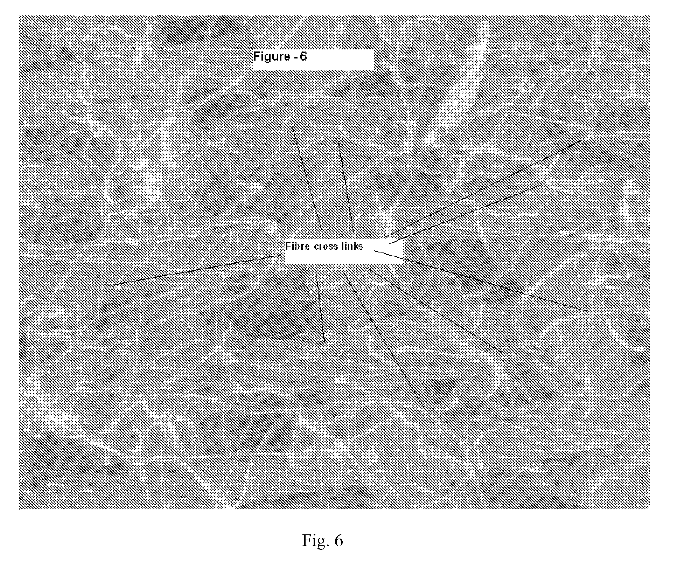

Figure 6 shows the SEM Photograph of cross linking fibres & cross links.

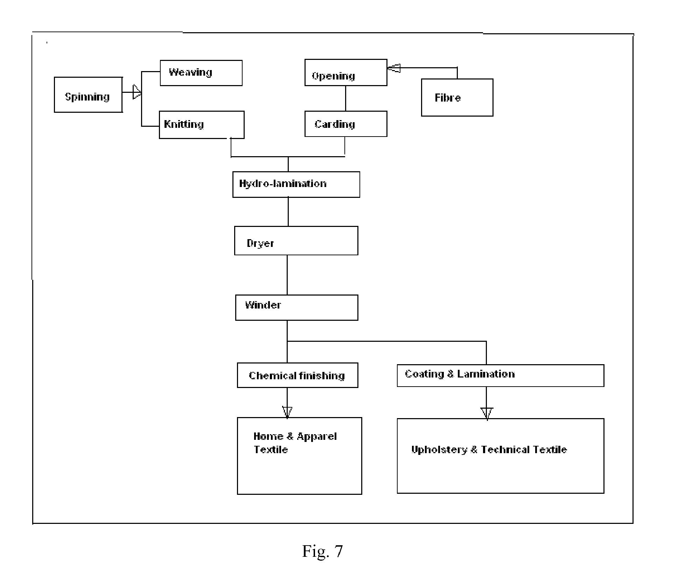

Figure 7 shows the Process route used for manufacture of wonder fabric.

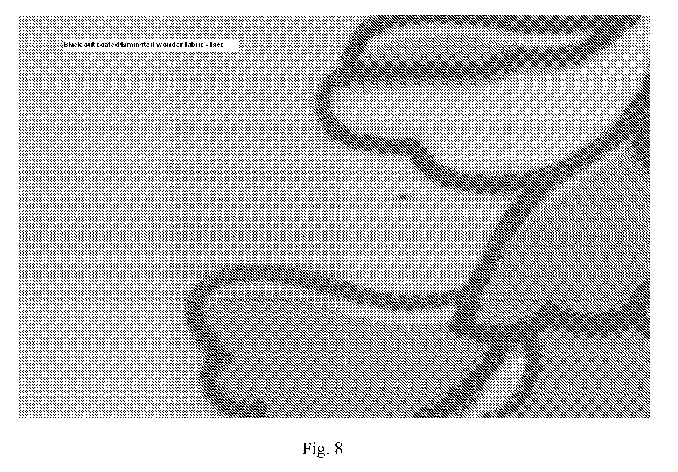

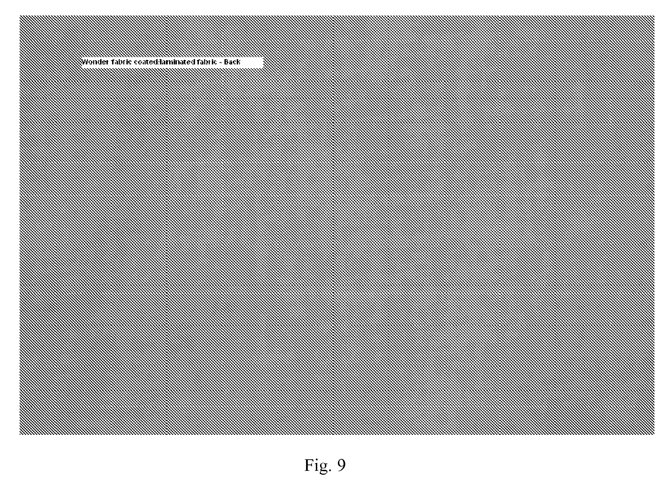

Figure 8 and Figure 9 show the face & back side of coated/laminated blackout curtain made out of wonder fabric.

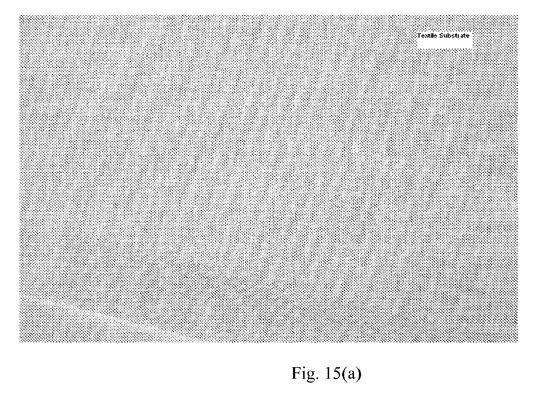

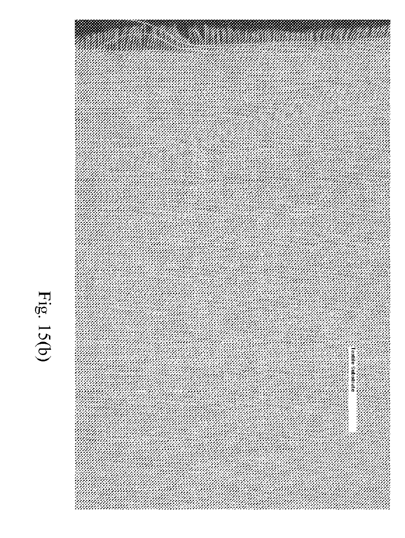

Figure 15 (a) and (b) shows textile substrate.

### DETAILED DESCRIPTION OF DRAWINGS

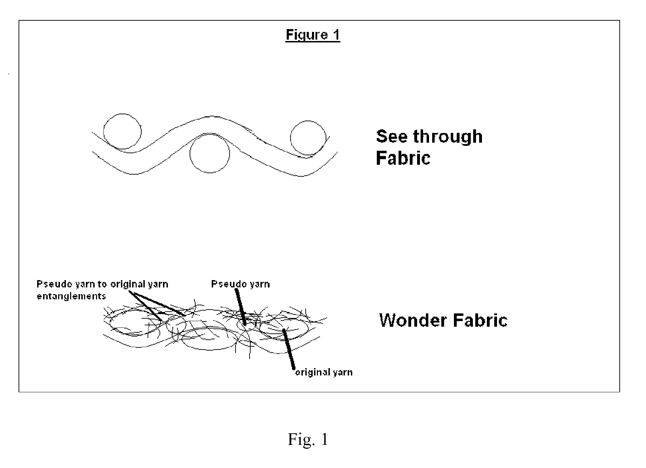

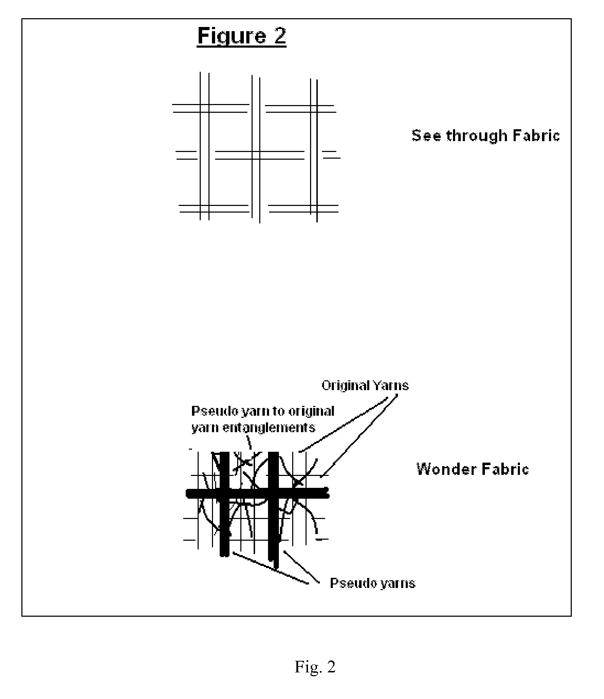

From Figure 1 & 2 one can see the pseudo yarns formed in the space between two consecutive yarns of the see through fabric component. One also can understand that fibres from these pseudo yarns & also external fibres entangle & create bonding between pseudo yarns & yarns of the see through fabric component.

In SEM photograph as shown in figure 4, 10, 11 one can see the pseudo yarns formed in the space between two successive original yarns. For better clarity, these pseudo yarns are encircled & shown. In SEM photograph as shown in figure 5, one can see the pseudo yarns. External fibres bonding these pseudo yarns are also seen.

In SEM photograph as shown in figure 6, there are external fibres which bond the original yarns to each other. This helps guide & control original yam movement in the fabric. Fabric properties are depicted accordingly.

Figure 3 shows the Equipment configuration used for the manufacture of this Wonder fabric. This line has at least one fibre opening line with various opening, mixing/blending machines & if cotton then cleaning machines. Thus opened &/or cleaned fibre material is fed to carding machine. Here fibres are individualized & arranged in a particular manner as depicted by speeds & settings of rotating parts. For example, with proper planning & control of speeds & settings of doffer - transfer roll - random roll & adjustment of condenser suction rate one can control fibre orientation in the machine direction, cross direction or can create a random orientation. Fibres so individualized are delivered on to fibre transport belt in the form of a fibre web which is than transported to hydro-lamination device.

The fabric with see through construction is delivered from a fabric roll arranged behind the carding machine. Fabric is passed through expander for proper opening followed by proper tensioning through drafting rolls. So opened up fabric is supported/transported by guide rolls to hydro-lamination device.

In the hydro-lamination device, see through fabric is hit by at least one streams of high pressure water streams delivered through injector. At least one of the water stream strikes the fabric at an angle. Depending upon requirement, at least one water stream strikes the fabric in a direction in which fabric is moving or an opposite.

Selection of Hydro-lamination parameters is guided by the final fabric properties required.

So treated fabric with relaxed & voluminized yarns is met with fibre web as shown in the Figure 3. Both now onwards are made to face successive steps of hydrolamination.

Hydro-lamination is done using at least belt or perforated drums with suitable shells. Shells depict the effective perforation area used & water rebounce.

During hydro-lamination, at least one water stream will strike the fibres & fabric at preset angle & direction. Fabric & fibres are also made to face at least one oscillating water stream. Also, fabric & fibres are made to face at least one high pressure water stream. These water streams are arranged & parameters are designed based upon properties required in the final product. Water streams are delivered by injectors as shown in the Figure 3.

Remaining hydro-lamination parameters like jet size, jets/inch, jet length, vacuum, shell type, etc are planned depending upon the properties required in the final product that is Wonder fabric.

So formed Wonder fabric is then passed on to Dewatering device. This device removes physically held water by using vacuum.

Thus, dewatered Wonder fabric is then passed through dryer for removing chemically held water. Wonder fabric so dried is finally wound on, at winder. If necessary, before winding, it is slit in width wise direction to the pieces of required widths.

### DETAILED DESCRIPTION OF INVENTION

The invention will now be described in detail, along with certain preferred and optional embodiments so that various aspects thereof may be more fully understood and appreciated.

The present invention provides a unique, multifunctional & durable textile material with a look acceptable for Home textile, Upholstery & Apparel textile application having multiple advantages over prior art.

Here onwards, textile fabric with see through & unstable construction will be called as textile substrate as shown in figs. 15(a) and (b). As shown in Figure 4 & 5, at least on one side of textile substrate, pseudo yarns are formed. These pseudo yarns are entangled with textile substrate.

Textile substrate can be manufactured using weaving technology or knitting technology. Yarns that are used for manufacturing of textile substrate can be combed and / or carded yarns. Further, these yarns can be either ring spun or open end spun yarns or air jet yarns or air vortex yarns or friction spun yarns. Also yarns spun from any other technology other than the one mentioned before can be used for manufacturing textile substrate. Also, these yarns can be monofilament yarns or multifilament yarns spun from synthetic polymer melts.

Yarns used for the manufacturing of textile substrate can be a single yam or plied yam. Also, these yarns can be with hard core or soft core.

Yarns used for manufacturing of textile substrate can be spun out of grey cotton or bleached cotton or dyed cotton or undyed manmade fibre or dyed manmade fibre or blends.

As shown in Figure 6, the yarns from textile substrate are also entangled with the fibres. These fibres here onwards will be called as cross linking fibres.

The process of layering of fibre web on top side of textile substrate followed by entanglement of fibres amongst themselves thereby forming pseudo yarns followed by entanglement of pseudo yarns with yarns of textile substrate followed by entanglement of cross linking fibres with fibres of yarns from textile substrate & pseudo yarns will be called as Hydro lamination.

Hydro entanglement device usually consists of at least one pressurized water stream delivered by injector through jet strip on to material being supported by belt or drum with or without shell. It is common that water jets from injector point towards the drum centre.

Material so formed, is further treated with chemicals for pre treatment, dyeing and/or printing & post treatment. The final product so delivered & as shown in Figure 8, 9 & dyed/bleached fabric as shown in figures 12(a) and (b), 13 (a) and (b) and 14 (a) and (b), now on wards will be called as wonder fabric.

Textile substrate is taken directly from weaving machine or knitting machine. Also, it is possible that textile substrate is dyed & processed beforehand.

In an embodiment, the textile substrate is subjected to at least one high pressure straight jet stream. Further, the said textile substrate is also subjected to at least one jet stream that strikes at an angle. As required, direction of fabric movement is adjusted in such a way that jets & textile substrate move in the same direction or oppose each other. In either case, yarns from textile substrate are subjected to combing / stripping action & thereby resulting in rearrangement of fibres in the yarns & making it suitable for serving as the support material during formation of pseudo yarns. This also results in random fibre entanglements resulting in yam structure which can not be untwisted or disintegrated easily. This also results in partial entanglement of fibres from component yarns. As per requirement, the entanglement level can be controlled thereby improving fabric properties.

By selecting proper jet stream parameters like jet size of 0.079 mm to 0.14 mm, with suitable energy when strikes textile substrate, suitable hand-feel & touch are created.

In a preferred embodiment, the invention provides a multipurpose wonder fabric suitable for home textile, upholstery and apparel textile application comprising at least one textile substrate with see-through and unstable construction, hydro laminated with pseudo yarns so formed by hydro entangling fibres on at least one side of textile substrate. The wonder fabric will have at least one textile substrate hydro-entangled with cross linking fibers at least on one side.

The said textile substrate is manufactured using weaving technology or knitting technology. Further, textile substrate can be manufactured from natural fibres or manmade fibres or their blends. The said textile substrate is constructed with yam counts in the range of Ne 1 to 160, preferably in the range of Ne 5 to 160. Further, said textile substrate if woven, is constructed with 42 up to 300 threads/inch in warp way direction, preferably in the range of 30 to 168 threads/inch & 15 to 500 threads/inch in weft way direction, preferably in the range of 25 to 300 threads/inch & with a plain or twill or satin or combination weave & with weight of 45 up to 1200 g/m2 preferably in the range of 45 to 300 and if warp knitted or weft knitted, with weight of 60 up to 400 g/m2.

The fibres used for formation of said pseudo yarns are selected from natural or manmade fibres or blends thereof.

In another embodiment, the invention provides an assembly for manufacturing of wonder fabric comprising, an opening line which comprises a bale opener, a heavy trash separator, a multimixer, a fine opener and card feeder for cleaning and opening the fibre material for feeding to carding machine, a carding machine for individualization and arranging of fibres in a required manner, a fabric unwinding expanding & tensioning device & as a part of hydro lamination device, a fabric combing device comprising of at least one perforated drum or at least one perforated belt or at least one perforated drum with belt and with at least one straight jet stream and / or at least one jet stream striking textile substrate at an angle. Perforated drum if covered can be with perforated sleeve or perforated belt. Hydrolamination assembly further comprises at least 1 perforated drum or plurality of drums comprising of at least 1 straight jet stream or plurality of jet streams with pressures gradient as required for hydro lamination & at least one high pressure straight jet stream & at least one jet stream striking drum at an angle & at least one oscillating injector. Perforated drum or drums are covered with belt with suitable openness or metal or plastic sleeve with suitable perforations, a dewatering device for dewatering of wonder fabric, a dryer for drying of wet wonder fabric, winder for winding of dried wonder fabric, a padless chainless or chain Merceriser for mercerization, swelling & preparation of wonder fabric for textile dyeing & finishing process, an open width continuous bleaching /dyeing range for dyeing of wonder fabric, a padder with curing device for padding of chemical agents followed by fixation, a soft flow machine or jet dyeing machine as required for pretreatment & dyeing of wonder fabric, an open width machine or soft flow machine for top finishing of wonder fabric, an emerising machine or raising machine for mechanical surface finishing of wonder fabric, a sanforisation machine or decatising machine for dimensional stabilization of wonder fabric, a knife coater or padder or kiss roll arrangement or zimmer machine followed by curing device for coating of wonder fabric on at least one side with chemicals like polyurethane, thermoplastic polyolephenes, thermoplastic polyurethane, polyurethane + aluminium, etc and a lamination device for lamination of wonder fabric on at least one side with membrane/films made out of PU or TPU or TPO, FR Material, etc. followed by cross linker.

In another embodiment, the invention provides a process for manufacturing pseudo yarns comprising following steps:
a. pre-entangling fibres of web thereby creating necessary strength in the web;
b. supporting the web of step (a) on at least one side of textile substrate;
c. subjecting web of step (b) to at least one jet stream at required pressure or plurality of jet streams with pressure gradient resulting into web disintegration & slipping away of fibres and;
d. rolling around of fibres formed in step (c) in the same space being supported by textile substrate thereby resulting in to formation of pseudo yarns.

In yet another embodiment, the invention provides for a process for manufacturing of wonder fabric comprising steps of:
a. opening & cleaning of fibers in opening machines;
b. individualizing the fibers of step (a) in carding machine thereby delivering web of fibres;
c. opening of textile substrate by expander roll;
d. tensioning of textile substrate of step (c) through fabric tensioner & then subjecting it to high pressure water jets striking straight and / or at an angle;
e. layering of pre-treated textile substrate of step (d) with pre-entangled fibre web of step (b) for the formation of pseudo yarns as described above;
f. subjecting the pretreated textile substrate of step (d) and pseudo yarns of step (e) to at least 1 high pressure water jet, striking straight or at an angle and oscillating water jet so as to form wonder fabric;
g. dewatering wonder fabric of step (f) by passing through dewatering device;
h. drying dewatered wonder fabric of step (g) by passing through dryer wherein temperature is adjusted according to fiber type such that, dried fabric is left with residual moisture equal to natural moisture regain of the fiber;
i. winding dried wonder fabric of step (h) on to bobbins/tubes by using winder;
j. chemically pre-treating and/or drying and/or dyeing and/or printing and top finishing the wonder fabric of step (i) so that it can be used for textile applications like home, upholstery & apparel textile, and;
k. coating or laminating of wonder fabric of step (h) for technical textile & upholstery application.

Textile substrate can be made out of natural or manmade fibres or their blends. It can be woven or knitted or composite material but with see through & unstable construction.

Staple fibres are opened or opened & cleaned followed by carding. One can use a classical non woven card with worker/stripper rolls or a flat card. After carding, these fibres are delivered in the web form. If required this fibre web is lightly entangled using water jets

So pre entangled fibres or non entangled fibres are delivered on top side of textile substrate. In case, fibres are non entangled before; these fibres are lightly entangled now so that they are capable of taking higher level of energy from high pressure water jets.

While the invention has been explained with reference to the specific examples of the invention, the explanation is illustrative, and the invention is limited only by the appended claims (after explaining the invention)

**Example 1:** 0.1 mm jet with 23 jets/inch arranged in single row strikes the web at pressure of 50 bar there by creating fibre entanglement level resulting in to tensile breaking load of 4.5 Newton/meter of width of web in machine direction & 1.7 Newton/meter of width of web in cross direction.

This fibre web then is subjected to a plurality of water jets designed with parameters suitable for forming pseudo yarns on the surface of the textile substrate. In this case, textile substrate works as support for fibre web. Textile substrate guides & facilitates rolling around of fibres from web there by making these fibres to entangle among themselves & form pseudo yarns.

**Example 2:** Textile substrate with fabric cover factor of 14 is layered with cotton fibre web & whole structure is subjected to high pressure water jet streams with jet description of 0.1 mm/23 ets/inch, 0.1mm/40 jets/inch & 0.1 mm/40 ets/inch results in maximum fibre rolling & pseudo yam formation as shown in Figure 4, with very few traces of fibres on the bottom side of textile substrate.

Above phenomena is also influenced by fibre properties like polymer, fibre length, stiffness, diameter & surface friction. Web properties like fibre orientation and fibre individualization also influence the above phenomena.

The above structure is then subjected to at least one high pressure water jet stream. Fibres from pseudo yarns entangle with fibres of yarns from textile substrate. Water jet parameters are selected according to the balance between strength and product stiffness.

**Example 3:** Textile substrate with 80 g/m2 & pseudo yam structure with 35 g/m2 when subjected to high pressure water stream with 0.1 mm jet size, arranged in single row results in pilling resistance of 5.0 & fabric stiffness acceptable for sheeting application.

Out of various attributes of textile fabric meant for home & apparel textile, first & foremost attribute important for any consumer is the look of the fabric, the next important attribute being feel. This is followed by the strength & durability. With time & increasing awareness of safety & hygiene, attributes like antimicrobial, odor kill, fire retardancy, etc are becoming more & more important.

On the other hand, cost is also an important aspect. Those products which deliver required look & attributes at nominal cost will have a surety of sale. This is known as value for money.

As described above in the background of invention, raw material cost is the biggest of all the components of cost. On account of technological limitations of spinning & weaving or knitting, technically & commercially important raw material properties like fibre length, strength, etc. cannot be dropped below a particular limit. Therefore using this approach of value engineering by use of inferior raw material, costs can not be reduced drastically, for example; to the tune of 15 to 50%. Also, there is a risk of overall drop in operation efficiency. This for sure will deliver inferior product.

In this invention, a different & unique approach is followed. Textile substrate is designed & constructed with a very open & see through construction thereby reducing the weight of the textile substrate to the tune of 15 to 50%. This brings down the cost drastically to the level of up to 50%. However, this textile substrate in original form is not stable & also does not have the look & other attributes acceptable for home, upholstery & apparel application.

This invention uses this textile substrate as a support for the entanglement & formation of pseudo yarns. The fibres from a web, once subjected to high pressure water jets, prefer to slide down into the gaps. These fibres prefer to entangle among themselves first till they achieve a certain packing density. This gives rise to formation of pseudo yarns. So formed pseudo yarns along with textile substrate, when subjected further to high pressure water jets, entangle through their fibres with the fibres from yarns of textile substrate.

The remaining fibres which do not roll down & become part of pseudo yarns entangle with the fibres from yarns of textile substrate. In this way they cross-link among the yarns of textile substrate. This also depicts the fabric properties. By using the process according to the invention, one can achieve durable press rating of at least 3.0 meaning wonder fabric so done is easy care, by default.

Phenomena described above also results in to introducing dimensional stability in the unstable textile substrate.

**Example 4:** Textile substrate with Ne 40/1 X Ne 40/1 & 100X68 threads/inch in warp & weft respectively & web of 26 mm cotton fibres, when operated through this invention results into residual shrinkage of less than 4.0% in warp & less than 2% in weft way direction. This is in contrast to the original shrinkage potential of 12% in warp & 6% in weft way direction as tested in textile substrate.

Apart from look, pseudo yarns so formed & entangled with yarns from textile substrate depict the tensile strength, tear strength. The improvement in tensile strength can be by at least 25%. Tear strength also improves by at least 8%.

**Example 5:** Textile substrate with Ne 40/1 X Ne 40/1 & 107X38 threads/inch in warp & weft way direction when run along with cotton fibre web made out of 24 mm & 22 g/tex strength through findings of the invention gives breaking load 90 1b (+50%) & 34 (+20%) 1b when tested for tensile strength. This also delivers tear strength of 4.5 1b (+35%) & 3.5 1b (+15%) in weft way direction.

Both pseudo yam formation & entanglement with yarns from textile substrate along with cross-linking fibres entanglement with yarns from textile substrate result in to 15 to 35% improvement in resistance for seam slippage.

This invention not only blooms out yarns from textile substrate but also introduces a high number of pores & continuous capillaries. As a result, the wonder fabric delivered is highly absorbent & is capable of quick transportation of moisture through capillaries.

**Example 6:** Textile substrate with Ne 20/1 X Ne 20/1 & 45 X 25 threads/inch along with cotton fibre pseudo yarns when treated according to the invention, wonder fabric so delivered possesses the absorption rate of less than 1 second.

Vertical wicking test shows the attainment of 13 cm in 30 minutes. This implies that wonder fabric so done is highly comfortable to wear.

During hydro-lamination, wonder fabric is subjected to at least one oscillating high pressure jet stream thereby inculcating look features.

Wonder fabric so formed is also subjected to at least one high pressure jet stream which strikes the hydro-laminated surface at an angle thereby inculcating durability features.

The invention provides the line configuration for the manufacture of multi purpose wonder fabric comprising of opening line for opening of fibres in bale or similar form into small fibre tufts, carding machine for individualization of fibres & form the web with suitable fibre orientation, transport arrangement for web up to hydro-lamination device, fabric un winder for proper unwinding of fabric, expander & pre-tensioning roll for expanding & controlling fabric width & do not allow formation of creases, Hydro-lamination device for formation of pseudo yarns, their entanglement with yarns of textile substrate, cross linking of fibres with yarns of textile substrate, combing through & stabilization of yarns from textile substrate, dewatering device for removing physically held water, dryer for removing chemically held water & winder for winding of so formed wonder fabric. For Apparel, Home textile & Upholstery applications, it is processed through traditional textile processing machines. For Technical textile and upholstery applications, it is processed through coating &/or lamination machines.

The invention provides the following process for manufacturing of wonder fabric. The process comprises following steps:
a. Opening, adjusting width & pre tensioning of textile substrate thereby preventing formation of wrinkles or creases.
b. Cleaning & combing through yarns of textile substrate with high pressure water jet stream thereby cleaning the surface, inculcating required shape & dimensions & entanglement among fibres and/or yarns as desired & to a level as desired so that textile substrate becomes suitable support for pseudo yam formation.
c. Opening & carding of fibres & form the web with desired web properties.
d. Overlapping so formed web on the top of one of the sides of textile substrate & subject both to at least one or plurality of high pressure jet streams thereby forming pseudo yarns, entangle them with yarns from textile substrate & also cross link the remaining fibres with the yarns from textile substrate thereby delivering wonder fabric with desired properties.
e. So formed wonder fabric is dewatered using dewatering device followed by drying using dryer.
f. Dried wonder fabric is then wound on to rolls by winder.
g. This wonder fabric is then processed through chemical processing like dyeing & surface finish for home, upholstery & apparel textile application.
h. This wonder fabric is processed through coating /lamination machines so as to manufacture upholstery & technical textile products like black-out curtains, barrier fabrics, shoe uppers, soft covers for automobiles, etc.

The invention is more specifically explained by following examples. However, it should be understood that the scope of the present invention is not limited by the examples in any manner. It will be appreciated by any person skilled in this art that the present invention includes following examples and further can be modified and altered within the technical scope of the present invention.

### Example 7:

The following table shows how the invention inculcates high absorption rate in the so created wonder fabrics. Textile substrates with different counts & constructions along with cotton fibre pseudo yarns are processed using method according to the invention and thereby exhibit the high absorption rate.

The process for manufacture of the wonder fabrics of the invention described in this Example comprises of spinning of yarns followed by weaving of spun yarns. The manufacturing process further comprises of opening & pre tensioning of textile substrate followed by combing through, cleaning, fibre repositioning & shaping up the yam. Staple fibres are opened up & cleaned, if required followed by web formation & positioning web on at least one side of substrate. This is followed by formation of pseudo yarns & hydro-lamination of pseudo yarns & textile substrate using at least

one straight & at least one water jet striking at an angle & drying & winding of the product. This is followed by bleaching / dyeing & / or printing.

### Water Absorption Test

Test Method used: AATCC 79
Test Conducted by: SGS, Mumbai

**Test Results:**

| Sr. | | Fabric | | | | | Absorption |
|---|---|---|---|---|---|---|---|
| No. | ITS ID | ID | EPI | PPI | WrpCt | Weft Ct | Time (sec) |
| 1 | 13999 | 4031D | 107 | 38 | 40cw | 40cw | 1 |
| 2 | 14000 | 6031D | 96 | 45 | 60cw | 60cw | 1 |
| 3 | 14009 | 6031W | 96 | 45 | 60cw | 60cw | 1 |
| 4 | 14003 | 6031P | 96 | 45 | 60cw | 60cw | 1 |
| 5 | 14010 | 4032W | 107 | 38 | 40cw | 40cw | 1 |
| 6 | 14007 | 3031W | 49 | 34 | 30 cw | 30cw | 1 |
| 7 | 14008 | 4031W | 107 | 38 | 40cw | 40cw | 1 |

### Example 8:

Following table shows that different textile substrates along with pseudo yarns made out of cotton fibres when processed according to the invention result in a high water wicking rate. This high wicking rate combined with high absorption rate provides a high level of comfort to the user.

The wonder fabrics of the invention described in this Example are manufactured according to the process described in Example 7.

### Vertical Wicking Test

Test Method: SGS in house
Test Conducted by: SGS

**Test Results:**

| | | | | | Weft | After 5 Min | After 30 Min |
|---|---|---|---|---|---|---|---|
| Sr. No. | Fabric ID | EPI | PPI | WrpCt | Ct | in Cms | in Cms |
| 1 | C212-1 | 45 | 25 | 20kd | 20kd | 8.1 | 13.3 |
| 2 | C252 | 68 | 45 | 40kd | 40kd | 7.7 | 13 |
| 3 | C222 | 56 | 25 | 20kd | 20kd | 7.2 | 12.6 |
| 4 | C212-2 | 45 | 25 | 20kd | 20kd | 7.3 | 12.8 |
| 5 | C232 | 45 | 25 | 30kd | 30kd | 7.6 | 13.3 |
| 6 | C241 | 56 | 25 | 30kd | 30kd | 7.5 | 12.5 |

### Example 9:

One can see from the table that this invention delivers wonder fabric which is highly durable.

Different textile substrates (as shown in the table) along with pseudo yarns made out of polyester/cotton fibre blend are processed according to the invention resulting in a very good resistance for pilling. Test is conducted on the hydro-laminated side so as to establish the high durability.

The wonder fabrics of the invention described in this Example are manufactured using a process which comprises the step of blending of Polyester & cotton fibres followed by spinning of yarns & weaving of these spun yarns.

The remainder of the manufacturing process is conducted as described in Example 7, with the addition of at least one oscillating water stream during hydro-lamination.

### Pilling Test

Test Method used: ASTM 4970
Test Conducted by: ITS, Mumbai

**Test Results:**

| **Sr.** | | **Fabric** | | | | **Weft** | **Pilling After 100** | |
|---|---|---|---|---|---|---|---|---|
| **No.** | | **ID** | **EPI** | **PPI** | **WrpCt** | **Ct** | **Cycle** | |
| | | | | | | | **ITS** | **Protocol** |
| 1 | 13999 | 4031D | 107 | 38 | 40cw | 40cw | 5 | **3** |
| 2 | 14000 | 6031D | 96 | 45 | 60cw | 60cw | 5 | **3** |
| 3 | 14001 | 4031P | 107 | 38 | 40cw | 40cw | 5 | **3** |
| 4 | 14003 | 6031P | 96 | 45 | 60cw | 60cw | 5 | **3** |
| 5 | 14004 | 3031P | 49 | 34 | 30 cw | 30cw | 5 | **3** |
| 6 | 14007 | 3031W | 49 | 34 | 30 cw | 30cw | 5 | **3** |
| 7 | 14008 | 4031W | 107 | 38 | 40cw | 40cw | 5 | **3** |
| 8 | 14009 | 6031W | 96 | 45 | 60cw | 60cw | 5 | **3** |
| 9 | 14010 | 4032W | 107 | 38 | 40cw | 40cw | 5 | **3** |

### Example 10:

From the following table, one can see that wonder fabric according to the invention exhibits a very good dimensional stability. It is interesting to note that fabric is stabilized using fibre rearrangement in the yarns of textile substrate followed by further higher level of entanglement among fibres in these yarns. Traditional process of crimp interchange & rearrangement in thread density for fabric stabilization is not used here in this invention. Cross-linking fibres also entangle with fibres from yarns of textile substrate & thereby help stabilize the structure of wonder fabric. Level of entanglement is controlled to a level thereby attaining acceptable stiffness & feel of wonder fabric so manufactured.

The wonder fabrics of the invention described in this Example are manufactured according to the process described in Example 7, with the addition of a high pressure water stream of 50 jets/inch.

### Dimensional Stability Test

Test Method used: AATCC 135-2003
Test Conducted by: WIL, Anjar

| | | | | | | | Residual | | Residual | |
|---|---|---|---|---|---|---|---|---|---|---|
| Sr. | ITS | Fabric | | | | Wft | Shrinkage % | | Shrinkage % | |
| No. | ID | ID | EPI | PPI | WpCt | Ct | Warp 5 wash | | Weft 5 wash | |
| | | | | | | | WIL- Anjar | Protocol | WIL- Anjar | Protocol |
| 1 | 14009 | 6031W | 96 | 45 | 60cw | 60cw | 3 | **3** | 0.5 | **3** |
| 2 | 14010 | 4032W | 107 | 38 | 40cw | 40cw | 2.5 | **3** | 1 | **3** |
| 3 | Grey | 6030W | 102 | 50 | 60cw | 60cw | -10 | | 5.6 | |
| 4 | Grey | 4030W | 110 | 40 | 40cw | 40cw | -9 | | 4.5 | |

### Example 11:

The following table shows that manufacture of different textile substrates along with cotton pseudo yarns with 25 to 40 g/m2 according to the invention results in DP rating of at least 2.5 which is well above the protocol requirement for sheeting fabric.

Amount of entanglements between cross-linking fibres & yarns of textile substrate & the orientation of the same depict this wrinkle behavior.

The wonder fabrics of the invention described in this Example are manufactured according to the process described in Example 7. Fibre orientation in the machine direction in the web is controlled between 5 & 1.

### DURABLE PRESS RATING

Test Method used: AATCC 124 -2001
Test Conducted by: ITS

**Test Results: ITS**

| **Sr.** | | | | | | | | |
|---|---|---|---|---|---|---|---|---|
| **No.** | | **Fabric ID** | **EPI** | **PPI** | **WrpCt** | **Weft Ct** | **DP Rating 5 Wash** | |
| | | | | | | | **ITS** | **Protocol** |
| 1 | 13999 | 4031D | 107 | 38 | 40cw | 40cw | 3 | 2.2 |
| 2 | 14000 | 6031D | 96 | 45 | 60cw | 60cw | 2.75 | 2.2 |
| 3 | 14001 | 4031P | 107 | 38 | 40cw | 40cw | 3.25 | 2.2 |
| 4 | 14003 | 6031P | 96 | 45 | 60cw | 60cw | 3.25 | 2.2 |
| 5 | 14004 | 3031P | 49 | 34 | 30 cw | 30cw | 3 | 2.2 |
| 6 | 14007 | 3031W | 49 | 34 | 30 cw | 30cw | 2.5 | 2.2 |
| 7 | 14008 | 4031W | 107 | 38 | 40cw | 40cw | 3 | 2.2 |
| 8 | 14009 | 6031W | 96 | 45 | 60cw | 60cw | 3 | 2.2 |
| 9 | 14010 | 4032W | 107 | 38 | 40cw | 40cw | 2.75 | 2.2 |

### Example 12:

Depending upon amount of entanglement between pseudo yarns & yarns from substrate, level of entanglement among fibres in the yarns of textile substrate, orientation & amount of entanglement between cross-linking fibres & yarns from textile substrate depict the resistance for seam slippage.

The following table shows that different textile substrates with cotton fibre web, when subjected to the process according to the invention, result in high resistance to seam slippage.

It is important to remember the fact that textile substrate in its original form has a very open construction and also is unstable. In this original form, textile substrate is not at all suitable for applications in home & apparel textile.

The wonder fabrics of the invention described in this Example are manufactured according to the process described in Example 10.

### SEAM SLIPPAGE

Test Method used: ASTM D 434 1995; ASTM D 5034 FIXED SEAM OPENING
Test Conducted by: ITS

**Test Results:**

| **Sr.** | | **Fabric** | | | **Wrp** | **Weft** | | | | |
|---|---|---|---|---|---|---|---|---|---|---|
| **No.** | | **ID** | **EPI** | **PPI** | **Ct** | **Ct** | **SEAM SLIPPAGE** | | | |
| | | | | | | | **WARP** | **Warp** | **WEFT** | **Weft** |
| | | | | | | | **WIL- Anjar** | Protocol | **WIL- Anjar** | Protocol |
| 1 | 13999 | 4031D | 107 | 38 | 40cw | 40cw | 16 | 15.00 | 39.00 | 15.00 |
| 2 | 14000 | 6031D | 96 | 45 | 60cw | 60cw | 16 | 15.00 | 39.00 | 15.00 |
| 3 | 14001 | 4031P | 107 | 38 | 40cw | 40cw | 22 | 15.00 | 43.00 | 15.00 |
| 4 | 14003 | 6031P | 96 | 45 | 60cw | 60cw | 23 | 15.00 | 42.00 | 15.00 |
| 5 | 14004 | 3031P | 49 | 34 | 30cw | 30cw | 32 | 15.00 | 39.00 | 15.00 |
| 6 | 14007 | 3031W | 49 | 34 | 30cw | 30cw | 26 | 15.00 | 44 | 15.00 |
| 7 | 14008 | 4031W | 107 | 38 | 40cw | 40cw | 21 | 15.00 | 34.0 | 15.00 |
| 8 | 14009 | 6031W | 96 | 45 | 60cw | 60cw | 20 | 15.00 | 35.0 | 15.00 |
| 9 | 14010 | 4032W | 107 | 38 | 40cw | 40cw | 25 | 15.00 | 44.0 | 15.00 |

### Example 13:

The following table shows that wonder fabric comprising of different textile substrates with open & unstable construction along with a cotton fibre web with more fibres oriented in warp way direction when treated through the process according to the invention results in acceptable tensile strength in both warp & weft direction.

Since more fibres are oriented in warp way direction, the result is higher tensile strength in that direction.

The wonder fabrics of the invention described in this Example are manufactured according to the process described in Examples 7 and 10

### Tensile Testing Test

Test Method: ASTM D 5034
Test Conducted by: ITS

**Test Results:**

| Sr. | | Fabric | | | | Weft | **Warp Force in** | | **Weft Force In** | |
|---|---|---|---|---|---|---|---|---|---|---|
| No. | | ID | EPI | PPI | WrpCt | Ct | **Lbs** | | **lbs** | |
| | | | | | | | **ITS** | Protocol | **ITS** | Protocol |
| 1 | 14007 | 3031W | 49 | 34 | 30cw | 30cw | 79.2 | 30 | 31.89 | 30 |
| 2 | 14008 | 4031W | 107 | 38 | 40cw | 40cw | 71.3 | 30 | 34.92 | 30 |
| 3 | 14009 | 6031W | 96 | 45 | 60cw | 60cw | 63.5 | 30 | 35.65 | 30 |
| 4 | 14010 | 4032W | 107 | 38 | 40cw | 40cw | 113.8 | 30 | 32.08 | 30 |

### Example 14:

The following table shows that wonder fabric so manufactured delivers required tear strength.

The wonder fabrics of the invention described in this Example are manufactured according to the process described in Example 11. Water jet pressure needs to be selected not above 350 bar.

### Tear strength Test

Test Method: ASTM D 1424-2007A (Elmendorf Tester)
Test Conducted by: ITS

**Test Results:**

| Sr. | | Fabric | | | | Weft | | | | |
|---|---|---|---|---|---|---|---|---|---|---|
| No. | | ID | EPI | PPI | WrpCt | Ct | Warp | | Weft | |
| | | | | | | | **ITS** | Protocol | **ITS** | Protocol |
| 1 | 14007 | 3031W | 49 | 34 | 30cw | 30cw | 3.9 | 1.5 | 1.6 | 1.5 |
| 2 | 14008 | 4031W | 107 | 38 | 40cw | 40cw | 2.7 | 1.5 | 1.8 | 1.5 |
| 3 | 14009 | 6031W | 96 | 45 | 60cw | 60cw | 2.6 | 1.5 | 1.9 | 1.5 |
| 4 | 14010 | 4032W | 107 | 38 | 40cw | 40cw | 3.8 | 1.5 | 1.5 | 1.5 |

## Claims

1. A multipurpose fabric suitable for home textile, upholstery & apparel textile application comprising of at least one textile substrate with see through and unstable construction hydro laminated with pseudo yarns so formed by hydro entanglement of fibres on at least one side of the textile substrate.

2. A multipurpose fabric as claimed in claim 1, comprising of at least one textile substrate hydro entangled with cross-linking fibres at least on one side.

3. A multipurpose fabric as claimed in claim 1, wherein said textile substrate is manufactured using weaving technology.

4. A multipurpose fabric as claimed in claim 1, wherein said textile is manufactured using knitting technology.

5. A multipurpose fabric as claimed in claim 1, wherein said textile substrate is made of natural or manmade or their blends.

6. A multipurpose fabric as claimed in claim 1,wherein the fibres used for formation of pseudo yarns are natural fibres or manmade fibres or their blends.

7. An assembly for manufacturing a multipurpose fabric as claimed in claim 1 comprising:
a. opening line;
b. carding machine;
c. fabric unwinding, expanding & tensioning device & as a part of hydrolamination, a fabric combing device comprising of at least one perforated drum with at least one high pressure straight jet stream and / or jet stream striking textile substrate at an angle, wherein the said perforated drum, is either covered with sleeve or belt with suitable openness or is not covered;
d. hydro lamination unit with at least 1 perforated drum or plurality of perforated drums, comprising of at least 1 high pressure straight jet streams or plurality of them with pressure gradient and also comprising of at least one jet stream striking at angle and / or oscillating wherein, perforated drum / drums, are either covered with belt or sleeve with suitable openness & arrangement or are not covered;
e. dewatering device for dewatering of fabric;
f. dryer for drying of wet fabric;
g. winder for winding of dried fabric;
h. padless chainless or Chain Merceriser for mercerization, swelling & preparation of fabric for textile dyeing & finishing process, which is applicable for cotton fibre based fabric;
i. open width Continuous Bleaching /dyeing range for dyeing of fabric;
j. padder with curing device for padding of chemical agents followed by fixation which is applicable for manmade fibres & blends;
k. soft flow machine or jet dyeing machine as required for pretreatment & dyeing of fabric;
l. open width machine or soft flow machine for top finishing of fabric;
m. emerising machine or raising machine for mechanical surface finishing of fabric;
n. sanforisation machine for dimensional stabilization of fabric;
o. knife coater or padder or kiss roll arrangement or zimmer machine followed by curing device for coating of fabric on at least one side with chemicals like Polyurethane, Thermoplastc polyolephenes, Thermoplastic polyurethane, Polyurethane + Aluminium, etc; and
p. lamination device for lamination of fabric on at least one side with membrane/films made out of PU or TPU or TPO, FR Material, etc. followed by cross linker.

8. A multipurpose fabric as claimed in claim 1, said pseudo yarns are obtainable by a process comprising:
a. pre-entanglement of fibres of web there by creating necessary strength in the web; and
b. supporting this web on at least one side of textile substrate followed by subjecting this web to at least 1 jet stream at required pressure or plurality of jet streams with pressure gradient resulting into web disintegration & slipping away of fibres followed by rolling around of fibres in the same space being guided by textile substrate there by resulting in to formation of pseudo yarns.

9. A process for manufacturing a multipurpose fabric as claimed in claim 1, comprising:
a. fibre opening & cleaning in fibre opening machines followed by fibre individualization in carding machine there by delivering web of fibres;
b. textile substrate is opened up through expander roll followed by tensioning of textile substrate through fabric tensioner is subjected to high pressure water jets striking at an angle;
c. said pre treated textile substrate, is then layered with pre-entangled fibre web for the formation of pseudo yarns as according to the process of claim 8;
d. pretreated textile substrate & so formed pseudo yarns are subjected to at least 1 high pressure water jet striking straight & / or at an angle & is stationary or oscillating;
e. so formed fabric, is then de watered by passing through de watering device;
f. so dewatered fabric is then dried by passing through dryer where it is dried at a temperature which is adjusted according to fibre type in such a way that dried fabric is left with residual moisture content equal to natural moisture regain of the fibre;
g. so dried fabric is then wound on to bobbins/tubes by using winder;
h. this fabric is then chemically pre treated&/or dyed &/or printed & top finished so that it can be used for textile applications like home, upholstery & apparel textile; and
i. this fabric with or without going through process as claimed in the step h is then coated or laminated for technical textile & upholstery application.

10. A multipurpose fabric as claimed in claim 1, wherein said textile substrate is constructed with yam counts in the range of Ne 1 up to Ne 160 and are either single yam or plied yarns.

11. A multipurpose fabric as claimed in claim 3, wherein said textile substrate is constructed with 30 up to 300 threads/inch in warp way direction & 12 up to 500 threads/inch in weft way direction & with a plain or twill or satin or combination weave & with weight of 45 up to 1200 g/m2.

12. A multipurpose fabric as claimed in claim 4, wherein said textile substrate is constructed with 60 up to 400 g/m² & with warp or weft knitted structure.

## Amended claims

### Amended claims in accordance with Rule 137(2) EPC.

**1.** A multipurpose fabric suitable for home textile, upholstery & apparel textile application comprising of at least one textile substrate with see through and unstable construction and a fibre web hydro laminated to the textile substrate with pseudo yarns so formed by hydro entanglement of fibres from the web on at least one side of the textile substrate, **characterised in that** the textile substrate is pre-treated by being subjected to at least one high pressure straight jet stream and at least one jet stream that strikes at an angle.

**2.** A multipurpose fabric as claimed in claim 1, comprising of at least one textile substrate hydro entangled with cross-linking fibres at least on one side.

**3.** A multipurpose fabric as claimed in claim 1, wherein said textile substrate is manufactured using weaving technology.

**4.** A multipurpose fabric as claimed in claim 1, wherein said textile is manufactured using knitting technology.

**5.** A multipurpose fabric as claimed in claim 1, wherein said textile substrate is made of natural or manmade fibres or their blends.

**6.** A multipurpose fabric as claimed in claim 1, wherein the fibres used for formation of pseudo yarns are natural fibres or manmade fibres or their blends.

**7.** An assembly for manufacturing a multipurpose fabric as claimed in claim 1 comprising:
a. opening line;
b. carding machine;
c. fabric unwinding, expanding & tensioning device & as a part of hydro-lamination, a fabric combing device comprising of at least one perforated drum with at least one high pressure straight jet stream and/ or jet stream striking textile substrate at an angle, wherein the said perforated drum, is either covered with sleeve or belt with suitable openness or is not covered;
d. hydro lamination unit with at least 1 perforated drum or plurality of perforated drums, comprising of at least 1 high pressure straight jet streams or plurality of them with pressure gradient and also comprising of at least one jet stream striking at angle and/or oscillating wherein, perforated drum/drums, are either covered with belt or sleeve with suitable openness & arrangement or are not covered;
e. dewatering device for dewatering of fabric;
f. dryer for drying of wet fabric;
g. winder for winding of dried fabric;
h. padless chainless or Chain Merceriser for mercerization, swelling & preparation of fabric for textile dyeing & finishing process, which is applicable for cotton fibre based fabric;
i. open width Continuous Bleaching /dyeing range for dyeing of fabric;
j. padder with curing device for padding of chemical agents followed by fixation which is applicable for manmade fibres & blends;
k. soft flow machine or jet dyeing machine as required for pretreatment & dyeing of fabric;
l. open width machine or soft flow machine for top finishing of fabric;
m. emerising machine or raising machine for mechanical surface finishing of fabric;
n. sanforisation machine for dimensional stabilization of fabric;
o. knife coater or padder or kiss roll arrangement or zimmer machine followed by curing device for coating of fabric on at least one side with chemicals like Polyurethane, Thermoplastic polyolephenes, Thermoplastic polyurethane, Polyurethane + Aluminium, etc; and
p. lamination device for lamination of fabric on at least one side with membrane/films made out of PU or TPU or TPO, FR Material, etc. followed by cross linker.

**8.** A multipurpose fabric as claimed in claim 1, said pseudo yarns are obtainable by a process comprising:
a. pre-entanglement of fibres of the web thereby creating necessary strength in the web; and
b. supporting this web on at least one side of the textile substrate followed by subjecting this web to at least 1 jet stream at required pressure or plurality of jet streams with pressure gradient resulting into web disintegration & slipping away of fibres followed by rolling around of fibres in the same space being guided by textile substrate thereby resulting in to formation of pseudo yarns.

**9.** A process for manufacturing a multipurpose fabric as claimed in claim 1, comprising:
a. fibre opening & cleaning in fibre opening machines followed by fibre individualization in carding machine thereby delivering web of fibres;
b. textile substrate is opened up through expander roll followed by tensioning of textile substrate through fabric tensioner is subjected to high pressure water jets striking at an angle;
c. said pre-treated textile substrate, is then layered with pre-entangled fibre web for the formation of pseudo yarns as according to the process of claim 8;
d. pretreated textile substrate & so formed pseudo yarns are subjected to at least 1 high pressure water jet striking straight &/or at an angle & is stationary or oscillating;
e. so formed fabric, is then de-watered by passing through de-watering device;
f. so dewatered fabric is then dried by passing through dryer where it is dried at a temperature which is adjusted according to fibre type in such a way that dried fabric is left with residual moisture content equal to natural moisture regain of the fibre;
g. so dried fabric is then wound on to bobbins/tubes by using winder;
h. this fabric is then chemically pre treated &/or dyed &/or printed & top finished so that it can be used for textile applications like home, upholstery & apparel textile; and
i. this fabric with or without going through process as claimed in the step h is then coated or laminated for technical textile & upholstery application.

**10.** A multipurpose fabric as claimed in claim 1, wherein said textile substrate is constructed with yarn counts in the range of Ne 1 up to Ne 160 and are either single yarn or plied yarns.

**11.** A multipurpose fabric as claimed in claim 3, wherein said textile substrate is constructed with 30 up to 300 threads/inch in warp way direction & 12 up to 500 threads/inch in weft way direction & with a plain or twill or satin or combination weave & with weight of 45 up to 1200 g/m².

**12.** A multipurpose fabric as claimed in claim 4, wherein said textile substrate is constructed with 60 up to 400 g/m² & with warp or weft knitted structure.

**13.** A method of manufacturing a fabric suitable for home, upholstery and apparel textile application comprising:
• subjecting a textile substrate to at least one high pressure straight jet stream and at least one jet stream that strikes at an angle to provide a pre-treated textile substrate suitable for serving as a support material during subsequent formation of pseudo yarns by hydrolamination.

**14.** A method according to claim 13, wherein the jet streams have jet sizes of 0.079mm to 0.14mm.

**15.** A method according to claim 13 or claim 14, wherein the jet streams have a pressure of not above 350 bar.
